# EUROPÄISCHE PATENTSCHRIFT

(11) **EP 2 508 259 B1**
(45) Veröffentlichungstag und Bekanntmachung des Hinweises auf die Patenterteilung: **20.11.2013**
(21) Anmeldenummer: 12163202.0
(22) Anmeldetag: 04.04.2012
(51) Int. Cl.: G01N 35/04, B01L 9/00

(54) **Pipetiervorrichtung**
Pipetting device
Dispositif de pipetage

(30) Priorität: 08.04.2011 DE 202011000837 U
(43) Veröffentlichungstag der Anmeldung: 10.10.2012
(73) Patentinhaber: CyBio AG, 07745 Jena (DE)
(72) Erfinder: Naumann, Uwe, 07747 Jena (DE)
(74) Vertreter: Schaller, Renate

(56) Entgegenhaltungen:
- EP-A2- 1 407 861
- DE-U1-202007 000 904
- US-A1- 2003 027 345

## Beschreibung

Die Erfindung betrifft eine Pipetiervorrichtung mit einer Vielzahl von in einer Basisplatte in einem Raster angeordneten Pipetierkanälen, die im Wesentlichen jeweils aus einem Zylinder (Buchse) und einem darin geführten, steuerbar angetriebenen Kolben gebildet werden, sowie einem mit Pipettenspitzen bestückten Magazin, das in einer Magazinaufnahme aufgenommen und angehoben werden kann, um die Pipettenspitzen mit dem Pipetierkanälen in Verbindung zu bringen. Eine derartige Pipetiervorrichtung ist gattungsgemäß aus der DE U 202008 013 533 U1 bekannt.

Um einen schnellen Wechsel von Pipettenspitzen zu ermöglichen ist das Magazin nicht fest mit der Pipetiervorrichtung verbunden, sondern bildet mit den Pipettenspitzen eine Einheit, die von der Pipetiervorrichtung lösbar und damit samt Pipettenspitzen austauschbar ist.

Die Magazine sind rechteckige Platten mit in einem Raster angeordneten Löchern und haben, unabhängig von der Anzahl der Löcher und damit aufnehmbaren Pipettenspitzen über ihre Länge und ihre Breite, gleiche gerätespezifische Außenmaße.

Für die Präzision eines aufgenommenen oder abgegebenen Flüssigkeitsvolumens durch die Pipetierkanäle spielt u. a. die vollständige Abdichtung zwischen den Buchsen und den Pipettenspitzen eine wichtige Rolle, was gegenwärtig durch zwei unterschiedliche technische Prinzipien gelöst wird.

Beim Konusprinzip, welches von der einkanaligen Handpipette übernommen und vervielfältigt wurde, sitzen die Pipettenspitzen mit ihrem oberen Ende auf oder in an den Buchsen ausgebildeten Konen, welche die Pipettenspitzen kraftschlüssig halten und zu den Buchsen abdichten. Dieses Prinzip ist, vor allem wegen der spritztechnisch bedingten Ungenauigkeit der Pipettenspitzen, mit verschiedenen Nachteilen verbunden. Hier seien nur die unsichere gleichzeitige Abdichtung aller Pipettenspitzen und die enormen Aufzugskräfte genannt.

Um diese Nachteile zu vermeiden hat sich parallel zum Konusprinzip ein Dichtprinzip etabliert, bei welchem die den Pipettenspitzen zugewandten Enden der Buchsen in eine elastische Dichtplatte münden. Die Pipettenspitzen werden jeweils ein Ende einer Buchse umschließend, mittelbar über die Dichtplatte gegenüber den Buchsenabgedichtet. Zu diesem Zweck ist an den Pipettenspitzen ein Spitzenbund ausgebildet über den die Spitzen, in einem Magazin hängend, an die Dichtplatte gedrückt werden.

Auf die elastische Dichtplatte kann verzichtet werden, wenn spezielle aus zwei verschiedenen Kunststoffen hergestellte Pipettenspitzen eingesetzt werden. Der eigentliche Spitzenkörper zur Aufnahme von Reagenzien ist bei derartigen Pipettenspitzen gleich herkömmlichen, aus einem Kunststoff hergestellten Pipettenspitzen aus Polypropylen. Der Spitzenbund hingegen ist aus einem thermoplastischen Elastomer, womit die Pipettenspitzen unmittelbar gegenüber den Buchsen abgedichtet werden können.

Da es für die Beschreibung einer erfindungsgemäßen Pipetiervorrichtung unbedeutend ist, ob die Abdichtung der Pipettenspitzen mittelbar über eine Dichtplatte oder unmittelbar durch einen elastisch ausgebildeten Spitzenbundes erfolgt, wird in der weiteren Beschreibung der Einfachheit halber von einer üblichen Abdichtung mittels Dichtplatte ausgegangen.

Zum sicheren Abdichten muss das Magazin, in dem die Pipettenspitzen über Ihren Spitzenbund hängend angeordnet sind, eine hinreichend hohe Biegesteifigkeit aufweisen.

Die Biegesteifigkeit des Magazins, welches eine Lochplatte ist, ist mit der Auswahl des Materials durch dessen Elastizitätsmodul und dem Flächenträgheitsmoment, bestimmt durch dessen Dimensionierung, insbesondere dessen Dicke, gegeben.

Eine erfindungsgemäße Pipetiervorrichtung basiert auf dem zweitgenannten Dichtprinzip.

Bei allen bekannten Pipetiervorrichtungen dieser Art wird ein mit Pipettenspitzen bestücktes Magazin, wie ein Schubkasten, in eine vertikal bewegliche Magazinaufnahme, die einen einseitig offenen Rahmen darstellt, bis zum Anschlag hinein geschoben und dann mit einem sehr kräftigen Antrieb des Rahmens gegen die Dichtplatte gezogen oder gedrückt (Schubkastenprinzip).

Im Rahmen sind seitliche Führungsflächen und ein Anschlag vorgesehen, um das Magazin in einer definierten Position innerhalb des Rahmens so zu platzieren, dass die Pipettenspitzen den Buchsen fluchtend zugeordnet werden.

Nachteilig an dem Schubkastenprinzip ist grundsätzlich die Notwendigkeit von Freiraum vor der Pipetiervorrichtung, um die Zugänglichkeit zum Hineinschieben und Herausziehen des Magazins zu gewährleisten.

Soll der Spitzenwechsel automatisch erfolgen, wird eine weitere Handlingseinrichtung für das Hineinschieben und Herausziehen der Magazine benötigt. Auch diese Einrichtung benötigt unabdingbar den freien Zugriff zur Pipetiervorrichtung.

Wird der Spitzenwechsel nicht von einem Laborroboter mit relativ großem Arbeitsbereich durchgeführt, müssen auch Speicher, für Magazine mit frischen Pipettenspitzen und für Magazine mit benutzten Pipettenspitzen, in unmittelbarer Nähe der Pipetiervorrichtung untergebracht werden.

In Decksystemen finden Pipetiervorrichtungen gemäß dem als zweitgenannten Dichtprinzip bislang keine Verwendung.

Als Decksystem bezeichnet man Pipetierautomaten, bei denen alle für die Abarbeitung einer bestimmten Laboraufgabe notwendigen Probenträger, Reagenzienreservoirs und Hilfsmittel, wie Pipettenspitzen, jeweils auf einem sogenannten Deckplatz stationär angeordnet sind, um für eine Pipetiervorrichtung zugängig zu sein, die in drei Achsen verfahrbar ist, um jeden Deckplatz zu erreichen. Der Zugang für eine Pipetiervorrichtung oder einen Greifer erfolgt regelmäßig von oben, weshalb gemäß dem Stand der Technik für solche Decksysteme nur Pipetiervorrichtungen verwendet werden bei denen die Pipettenspitzen nach dem Konusprinzip mit dem Pipetierkanälen verbunden werden.

Eine Pipetiervorrichtung gemäß der zweitgenannten Dichtart wie sie auch für eine erfindungsgemäße Pipetiervorrichtung zur Anwendung kommt ist durch die Gebrauchsmusterschrift DE U 202008 013 533 U1 bekannt.

Die Pipetiervorrichtung umfasst als wesentliche Bauteile bzw. Baugruppen eine Basisplatte mit Durchgangsbohrungen, ein Pumpsystem mit einer Vielzahl von Pipetierkanälen, mit jeweils einer Buchse, welche in die Durchgangsbohrungen eingepasst sind, eine elastische Dichtplatte mit Löchern und ein mit Pipettenspitzen bestücktes Magazin, wobei die Durchgangsbohrungen und folglich die darin eingesetzten Buchsen, die Löcher der Dichtplatte und die Pipettenspitzen in einem gleichen Raster jeweils auf einer gemeinsamen mechanischen Achse angeordnet sind. Das Magazin ist über ein Getriebe mit einem Antriebsmotor verbunden.

Das Getriebe setzt die Drehbewegung und das Drehmoment des Antriebsmotors in eine lineare Hubbewegung und eine auf die Magazinaufnahme wirkende Anzugskraft um.

Damit werden die Pipettenspitzen an die Dichtplatte gehoben und mit einer ausreichend großen Anzugskraft über ihren Bund an die Dichtplatte, die Buchsen koaxial umschließend, angedrückt, womit die Pipettenspitzen gegenüber den Buchsen abgedichtet werden.

Das Magazin und die Magazinaufnahme sind gemäß der Gebrauchsmusterschrift DE U 202008 013 533 U1 so ausgeführt, dass das Magazin wie ein Schubkasten in die Magazinaufnahme eingeführt werden kann.

Im Vergleich zu anderen Pipetiervorrichtungen dieser Art soll sich eine Pipetiervorrichtung gemäß der Gebrauchsmusterschrift DE U 202008 013 533 U1 durch die Ausführung ihres Magazinanzuges unterscheiden. Die von einem Antriebsmotor erzeugte Drehbewegung wird über zwei gleiche Excentergetriebe in eine Hubbewegung des Magazinrahmens umgesetzt, wobei die Excentergetriebe auf der Basisplatte stellfest gelagert sind, weshalb das Gehäuse der Pipetiervorrichtung vom Kraftfluss, während des Anziehens des Magazins, völlig unbeeinflusst bleibt.

Eine Pipetiervorrichtung gemäß der Gebrauchsmusterschrift DE U 202008 013 533 U1 weist die gleichen Nachteile auf, wie sie eingangs für solche erläutert wurde, die auf dem Schubkastenprinzip aufbauend konstruiert wurden.

Der Erfindung liegt die Aufgabe zugrunde eine neue Pipetiervorrichtung zu schaffen, deren Platzbedarf für die Zuführung von Magazinen geringer ist.

Diese Aufgabe wird für eine Pipetiervorrichtung mit einer Basisplatte, einer Vielzahl von in einem vorgegebenen Raster in der Basisplatte angeordneten Pipetierkanälen, einem im gleichen Raster mit Pipettenspitzen, die jeweils einen Spitzenbund aufweisen, bestückten Magazin, einer Magazinaufnahme sowie einem Antriebsmotor und einem die Magazinaufnahme und den Antriebsmotor verbindenden Getriebe, womit das Magazin zwischen einer Aufnahme- und Ausgabeposition und einer Dichtposition, in der die Spitzenbunde mit den Pipetierkanälen kraftschlüssig, gegeneinander abgedichtet in Verbindung gebracht sind, vertikal bewegt werden kann, dadurch gelöst, dass sich die Magazinaufnahme in der Aufnahme- und Ausgabeposition in einem geöffneten Zustand befindet, in der sie eine Durchgangsöffnung größer als das Magazin bildet, so dass das Magazin von unten in die Magazinaufnahme eingeführt werden kann und sich die Magazinaufnahme in der Dichtposition in einem geschlossenen Zustand befindet, in dem in die Durchgangsöffnung Auflageflächen ragen, auf denen das Magazin aufliegt, und das Getriebe so ausgelegt ist, dass bei dessen Antrieb sowohl das Magazin vertikal bewegt, als auch die Magazinaufnahme in die genannten Positionen überführt wird.

Vorteilhaft umfasst die Magazinaufnahme einen geschlossenen Magazinrahmen, mit einem freien Innenraum, der die Durchgangsöffnung bildet und in dem in horizontaler Richtung axial verschiebbare Riegel vorgesehen sind, die im geschlossenen Zustand die Auflageflächen bilden.

Hierzu alternativ kann die Magazinaufnahme vorteilhaft zwei Schwenkklauen mit freien Enden, die im geöffneten Zustand die Durchgangsöffnung begrenzen und im geschlossenen Zustand die Auflageflächen bilden, umfassen.

Es ist von Vorteil am Magazin Zentrierkegel und in der Basisplatte Zentrieröffnungen vorzusehen, in welche die Zentrierkegel einführbar sind.

Das Getriebe umfasst vorteilhaft ein Schneckengetriebe, an dem abtriebsseitig eine Excenterwelle angebracht ist, auf der eine Zugkoppel um eines ihrer Enden drehbar gelagert ist, dessen anderes Ende mit dem Magazinrahmen in Verbindung seht. Hierzu alternativ umfasst das Getriebe vorteilhaft ein Schneckengetriebe, an dem abtriebsseitig eine Excenterwelle angebracht ist, auf der eine Zugkoppel vertikal verschiebbar gelagert ist, deren Enden mit Klauenarmen in Verbindung stehen, an denen die Schwenkklauen ausgebildet und so zwangsgeführt sind, dass die Schwenkklauen eine kombinierte Schwenk- und Hubbewegung vollziehen.

Es ist von Vorteil, dass an der Basisplatte Anschlagplatten mit schrägen Gleitflächen vorgesehen sind, an denen die Riegel mit einem äußeren Ende anliegen, sodass die Riegel während der vertikalen Bewegung verschoben werden.

Vorteilhaft weisen die beiden Schwenkklauen Drehachsen auf, die in zwei mit der Basisplatte in Verbindung stehenden Lagerplatten drehbar gelagert und mit jeweils einem Ende von zwei Hebelarmen starr verbunden sind, deren andere Enden mit dem Getriebe in Verbindung stehen, sodass die Schwenkklauen eine Schwenkbewegung vollziehen.

Anhand der Zeichnungen wird die Pipetiervorrichtung im Folgenden beispielhaft näher erläutert.

Es zeigen:
- Fig. 1 a-b: eine perspektivische Darstellung einer Pipetiervorrichtung gemäß einem ersten Ausführungsbeispiel im offenen und geschlossenen Zustand,
- Fig. 2a-d: eine Schnittdarstellung einer Pipetiervorrichtung gemäß Fig. 1 in vier verschiedenen Zuständen,
- Fig. 3a-b: eine perspektivische Darstellung einer Pipetiervorrichtung gemäß einem zweiten Ausführungsbeispiel im offenen und geschlossenen Zustand,
- Fig. 4a-b: eine perspektivische Darstellung einer Pipetiervorrichtung gemäß einem dritten Ausführungsbeispiel im offenen und geschlossenen Zustand,
- Fig. 5: eine erste Schnittdarstellung einer Pipetiervorrichtung gemäß Fig. 4b,
- Fig. 6a-d: eine zweite Schnittdarstellung einer Pipetiervorrichtung gemäß Fig. 4a-b in vier verschiedenen Zuständen,
- Fig. 7a-b: eine perspektivische Darstellung einer Pipetiervorrichtung gemäß einem vierten Ausführungsbeispiel im offenen und geschlossenen Zustand,
- Fig. 8a-d: eine Schnittdarstellung einer Pipetiervorrichtung gemäß Fig. 7a-b in drei verschiedenen Zuständen und
- Fig. 9:: einen Magazinstapel.

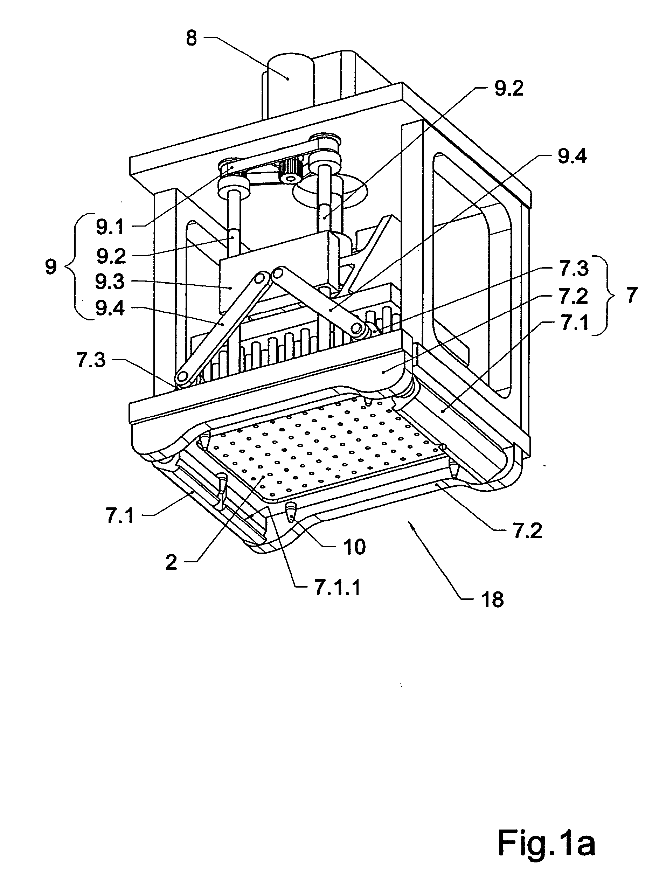

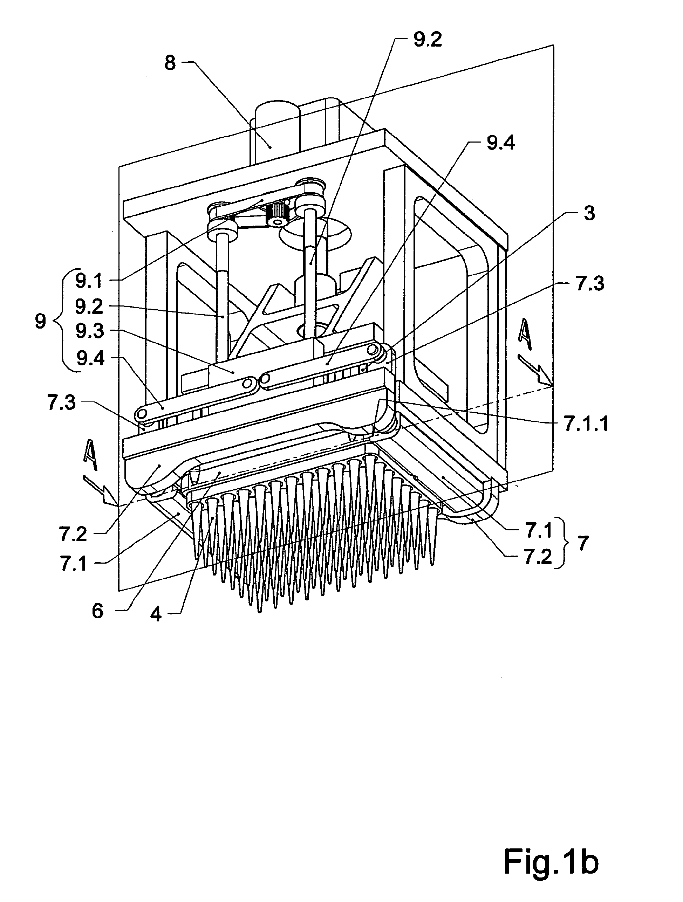

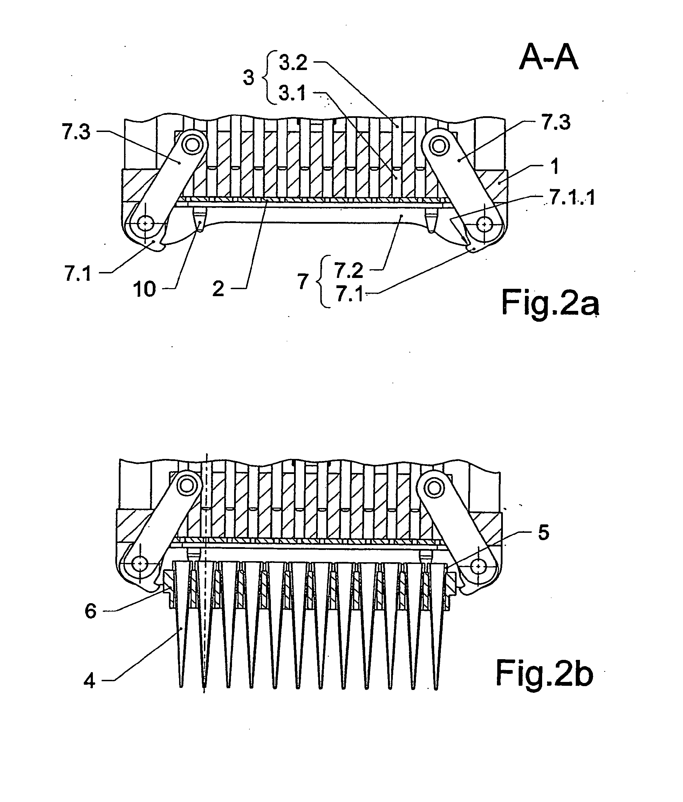

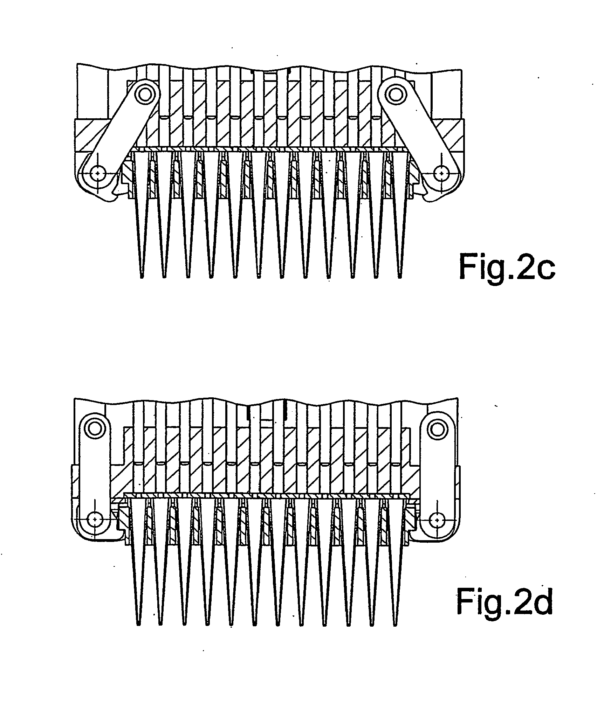

In den **Fig. 1****,** **2** ist eine Pipetiervorrichtung gemäß einem ersten Ausführungsbeispiel dargestellt. Bevor auf die Besonderheiten dieser ersten Ausführung eingegangen werden soll, sollen anhand dieser Figuren die Gemeinsamkeiten mit einer aus dem Stand der Technik bekannten Pipetiervorrichtung aufgezeigt werden.

Gleich dem Stand der Technik umfasst eine erfindungsgemäße Pipetiervorrichtung, im Wesentlichen eine Basisplatte 1, ein Pumpsystem mit mehreren Pipetierkanälen 3, eine Dichtplatte 2, eine Magazinaufnahme 7 zur Aufnahme eines mit Pipettenspitzen 4 bestückten Magazins 6 sowie einen Antriebsmotor 8, der über ein Getriebe 9 mit der Magazinaufnahme 7 in Verbindung steht, um die Pipettenspitzen 4 mittelbar mit den Pipetierkanälen 3 in Verbindung zu bringen.

Die Dichtplatte 2 kann dann entfallen, wenn zum Abdichten geeignete, spezielle Pipettenspitzen verwendet werden, wie sie im Stand der Technik erwähnt wurden. Der sonstige Aufbau der Pipetiervorrichtung bleibt davon unberührt.

Die Basisplatte 1 ist eine hochebene biegesteife Platte, die entlang ihrem Umfang mit einem Gehäuserahmen 15 verbunden ist, auf dem parallel zur Basisplatte 1 eine tragende Deckplatte befestigt ist, auf der ein Schrittmotor für das Pumpsystem und der Antriebsmotor 8 aufgesetzt sind.

In der Basisplatte 1 sind in einem vorgegebenen Raster eine Vielzahl von Durchgangslöchern 3.1 vorgesehen, die, wie hier in den Fig. 2 vereinfacht dargestellt, jeweils den Zylinder eines Pipetierkanals 3 bilden, in dem ein Kolben 3.2 geführt ist. Tatsächlich ist jedoch in die Durchgangslöcher 3.1 jeweils eine Buchse eingesetzt, die auch in die Dichtplatte 2 ragt und es sind Dichtungen, die auch als Führung wirken, vorhanden, über welche die Kolben 3.2 jeweils gegenüber der Basisplatte 1 abgedichtet sind. Da für die Erfindung die genaue Ausführung der Pipetierkanäle 3 nicht von Bedeutung ist, und diese die Figuren nur unnötig verkomplizieren würde, wurden die Pipetierkanäle 3 vereinfacht, nur durch Kolben 3.2 und Zylinder (Durchgangsloch 3.1), dargestellt.

An der Basisplatte 1 ist auf der vom Gehäuserahmen 15 abgewandten Seite, flächig anliegend, die Dichtplatte 2 fixiert, die in gleicher Rasteranordnung, wie die Basisplatte 1, Durchgangslöcher 3.1 aufweist.

Unterhalb der Basisplatte 1 ist die gegenüber der Basisplatte 1 bewegliche Magazinaufnahme 7 vorgesehen, in die das mit Pipettenspitzen 4 bestückte Magazin 6 eingelegt und vertikal an die Dichtplatte 2 und damit an die Basisplatte 1 angestellt werden kann.

Die Basisplatte 1 dient zum einen als Andruckplatte und zum anderen als Basis für eine gestellfeste Anordnung des Antriebsmotors 8 und des Getriebes 9, über welches der Antriebsmotor 8 mit der Magazinaufnahme 7 in Verbindung steht.

Das Magazin 6 und die Basisplatte 1 sind als hochebene und biegesteife Platten ausgeführt, um die Pipettenspitzen 4 gleichmäßig jeweils mit ihrem Spitzenbund 5 an die Dichtplatte 2 andrücken zu können.

Die bisherige Beschreibung einer Pipetiervorrichtung trifft sowohl auf eine solche gemäß dem Stand der Technik als auch gemäß der Erfindung zu.

Der Unterschied besteht in einer anderen Ausführung der Magazinaufnahme 7 und folglich des Magazins 6 sowie des Getriebes 9.

Vorteilhaft ist die Magazinaufnahme 7 so ausgeführt, dass die Abstände der Auflageflächen 7.1.1, 11.3.1, 13.1, über die das Magazin 6 aufliegt, im Vergleich zum Stand der Technik, geringer und gleichmäßig am Rand des Magazins 6 verteilt sind. Das erlaubt die Verwendung von Magazinen 6 geringerer Biegesteifigkeit. Die Biegesteifigkeit, die mit zunehmender Anzahl der aufgenommenen Pipettenspitzen 4 höher sein muss, wird nicht nur durch Auswahl eines anderen Materials oder einer anderen Dimensionierung erreicht, sondern insbesondere durch mehr Auflagefläche 7.1.1, 11.3.1, 13.1, die als Gegenlager der Andruckkraft entgegenwirken kann.

Nachfolgend sollen nun vier verschiedene Ausführungsbeispiele beschrieben werden, die sich im Wesentlichen in der Ausführung der Magazinaufnahme 7, 11, 13 unterscheiden. Sie haben gemeinsam, im Unterschied zum Stand der Technik, dass die Magazinaufnahme 7, 11, 13 von einem geöffneten Zustand, in dem das Magazin 6 vertikal in die Magazinaufnahme 7, 11, 13 gehoben werden kann (Aufnahme- und Ausgabeposition), in einen geschlossenen Zustand, in dem das Magazin 6 in einer definierten Lage in der Magazinaufnahme 7, 11, 13 aufliegt (Dichtposition), überführbar ist.

Im geöffneten Zustand bildet die Magazinaufnahme 7, 11, 13 eine Durchgangsöffnung 18, die größer als das Magazin 6 ist, sodass das Magazin 6 von unten in die Magazinaufnahme 7, 11, 13 eingeführt werden kann.

Im geschlossenen Zustand ragen in die Durchgangsöffnung 18 Auflageflächen 7.1.1, 11.3.1, 13.1.1, auf denen das Magazin 6 aufliegt.

Gemäß dem ersten Ausführungsbeispiel, dargestellt in den Fig. 1 und 2, umfasst die Magazinaufnahme 7 zwei sich gegenüberliegend angeordnete Schwenkklauen 7.1 mit Auflageflächen 7.1.1, zwei Lagerplatten 7.2, in denen für die Schwenkachsen der Schwenkklauen 7.1 jeweils zwei Drehlager vorgesehen sind und zwei Hebelarme 7.3, die starr mit den Schwenkachsen der Schwenkklauen 7.1 verbunden sind.

**Fig. 1a** zeigt die Magazinaufnahme 7 in einem geöffneten Zustand, in welcher das Magazin 6 zwischen den ausgeschwenkten Schwenkklauen 7.1 hindurch an die Dichtplatte 2 gehoben werden kann.

**Fig. 1b** zeigt die Magazinaufnahme 7 in einem geschlossenen Zustand, in dem das Magazin 6 auf den Auflageflächen 7.1.1 der eingeschwenkten Schwenkklauen 7.1 aufliegt.

Die **Fig. 2a****-d** zeigen in Schnittdarstellung neben den beiden in den in Fig. 1 dargestellten Zuständen zwei Zwischenzustände.

Der Antriebsmotor 8 steht über das Getriebe 9 mit den Hebelarmen 7.3 in Verbindung.

An dem Antriebsmotor 8 ist an seiner Abriebswelle ein Abtriebsritzel vorgesehen, welches einen Zahnriemen 9.1 antreibt, der zwei Gewindespindeln 9.2 in synchrone Drehbewegung versetzt. Entsprechend der Drehrichtung wandert eine doppelte Antriebsmutter 9.3 auf den Gewindespindeln 9.2 auf oder abwärts. An zwei an der Antriebsmutter 9.3 ausgebildeten Zapfen sind zwei Schubkoppeln 9.4 drehbar gelagert, welche die Bewegung auf die Hebelarme 7.3 übertragen.

Damit das Magazin 6 aufgenommen werden kann, muss sich die Magazinaufnahme 7 in einem geöffneten Zustand befinden (**Fig.1a****, 2a-c**).

In diesem geöffneten Zustand wird das mit Pipettenspitzen 4 bestückte Magazin 6 durch die geöffneten Schwenkklauen 7.1 hindurch an die Dichtplatte 2 angelegt.

Bevor die Pipettenspitzen 4 die Dichtplatte 2 erreichen, wird das Magazin 6 durch Zentrierkegel 10 in die richtige Lage zu den Pipetierkanälen 3 positioniert, sodass die Symmetrieachsen der Pipetierkanäle 3 und der Pipettenspitzen 4 fluchtend verlaufen (**Fig. 2b**).

Zum Anziehen des Magazins 6 an die Dichtplatte 2 und Abdichten der Pipettenspitzen 4 gegenüber den Pipetierkanälen 3 versetzt der Antriebsmotor 8 die beiden Gewindespindeln 9.2 so in Drehung, dass die Antriebsmutter 9.3 nach unten wandert.

Dadurch drücken die beiden Schubkoppeln 9.4 die Hebelarme 7.3 nach außen, wodurch die Schwenkklauen 7.1 unter den Rand des Magazins 6 gedreht werden und dort zur Anlage kommen. Mit dem weiteren Drehen werden die Pipettenspitzen 4 mit ihren Spitzenbunden 5 gegen die Dichtplatte 2 gepresst.

Die Schubkoppeln 9.4 und Hebelarme 7.3 bilden zwei Kniehebel, wodurch sich die Schwenkklauen 7.1 bei konstanter Drehzahl des Antriebsmotors 8 erst schnell unter das Magazin 6 drehen und dann langsamer das Magazin 6 anheben.

Je näher die Schubkoppeln 9.4 ihrer horizontalen Lage kommen, umso langsamer, aber kräftiger, drehen sich die Schwenkklauen 7.1. So ist es möglich mit einer klein Antriebsleistung des Antriebsmotors 8, große Andruckkräfte zu erzeugen und trotzdem den ersten Teil der Drehung schnell zurückzulegen.

Das Lösen der Pipettenspitzen 4 von der Dichtplatte 2 erfolgt in umgekehrter Reihenfolge.

Durch das Öffnen der Schwenkklauen 7.1 ist es im Gegensatz zum eingangs beschriebenen Schubkastenprinzip auch möglich, das benutzte und kontaminierte Magazin 6 direkt in einen Müllschacht abzuwerfen.

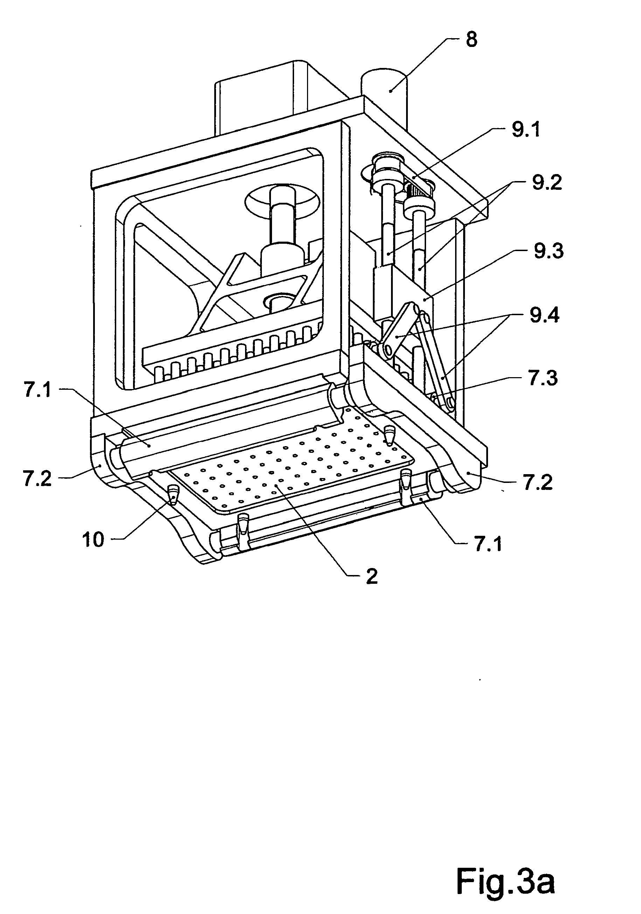

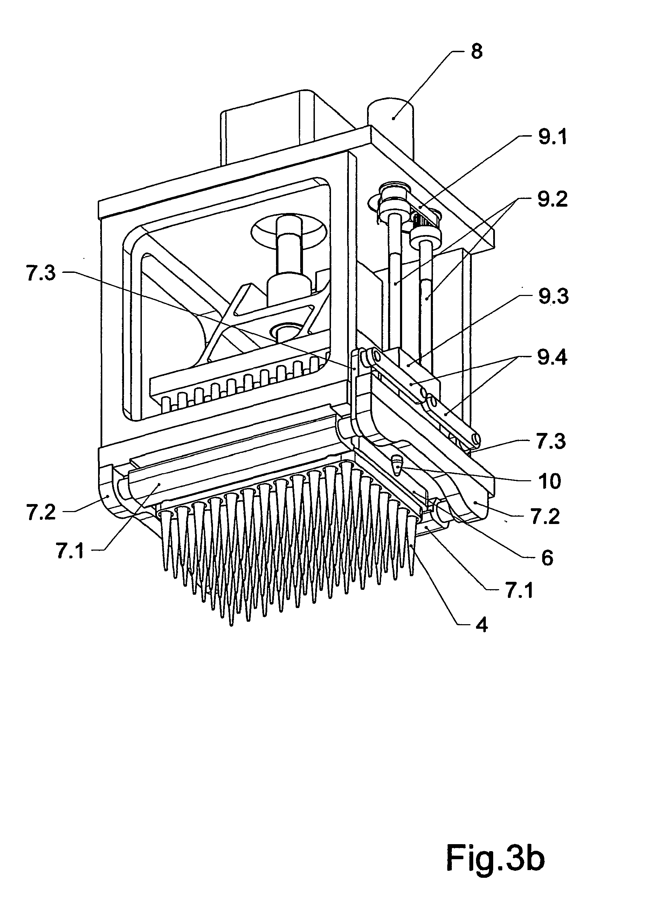

Ein zweites Ausführungsbeispiel, dargestellt in den **Fig. 3a****-b**, unterscheidet sich zum ersten Ausführungsbeispiel dadurch, dass die Pipetiervorrichtung so ausgelegt ist, dass die Schwenkklauen 7.1 nicht unter die kürzeren Seiten (Breitseiten) des Magazins 6, sondern unter dessen längere Seiten (Längsseiten) greifen.

Der Vorteil dieser zweiten Ausführung besteht darin, dass sich das Magazin 6 aufgrund der um ein 1/3 kürzeren Biegelänge (8 zu 12) überproportional weniger durchbiegt. Vor allem für Applikationen, bei denen es auf absolute Verschleppungsfreiheit beim Pipetieren ankommt, werden die Pipettenspitzen 4 sehr häufig gewechselt.

Um diesen Prozess zu beschleunigen, werden nicht nur die kontaminierten Pipettenspitzen 4, sondern das bestückte Magazin 6 nach seiner Benutzung verworfen.

Deshalb werden die Magazine 6 bevorzugt aus einem billigen, gefüllten Kunststoff hergestellt. Hochfeste Kunststoffe scheiden aus Preisgründen aus.

Trotz aller Füllung biegen sich solche Magazine 6 beim Andrücken und Dichten der Pipettenspitzen 4 mehr durch, als Metallmagazine gleicher Dicke.

Da die notwendige Andruckkraft mit der Anzahl der zu dichtenden Pipettenspitzen 4 steigt, ist es insbesondere bei Pipetiervorrichtungen mit mehr als 96 Pipettenspitzen 4 unsicher, das Magazin 6 nur über seine Breitseiten anzudrücken.

Erfolgt dagegen der Andruck über die beiden Längsseiten, dann ist die Durchbiegung auch ohne dreiseitige Auflage beherrschbar.

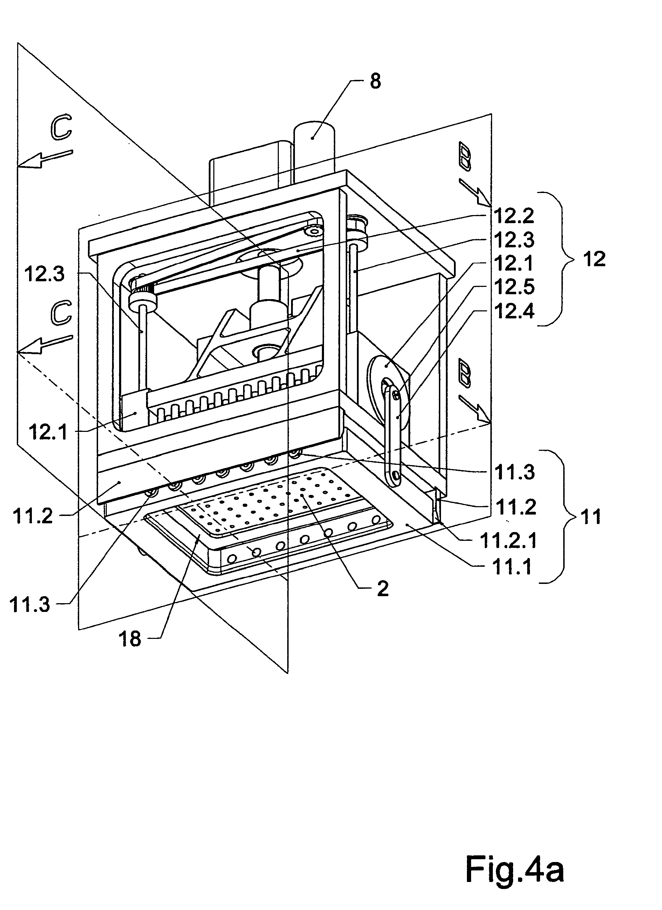

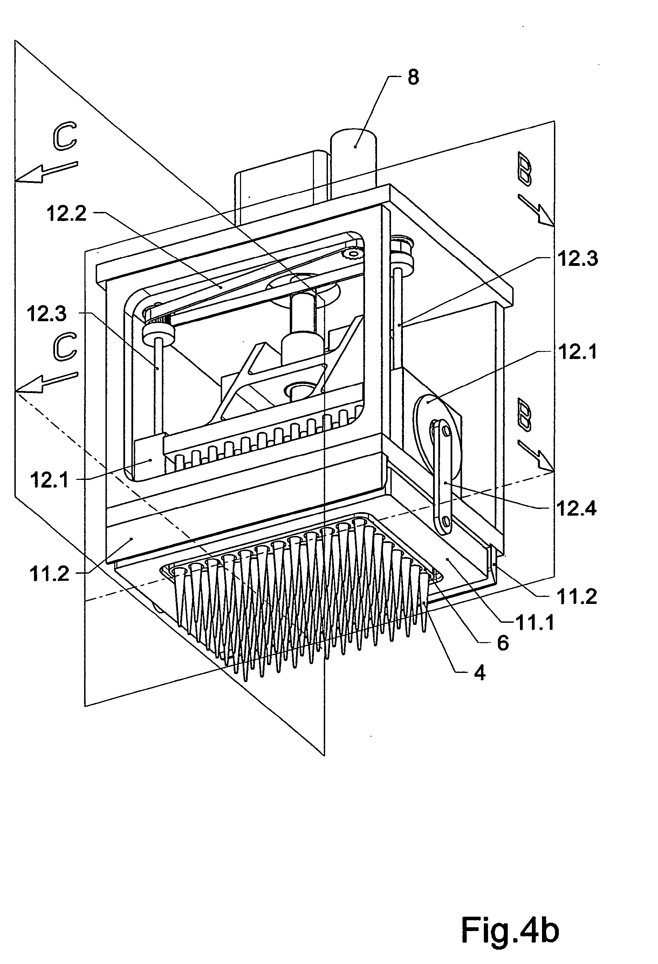

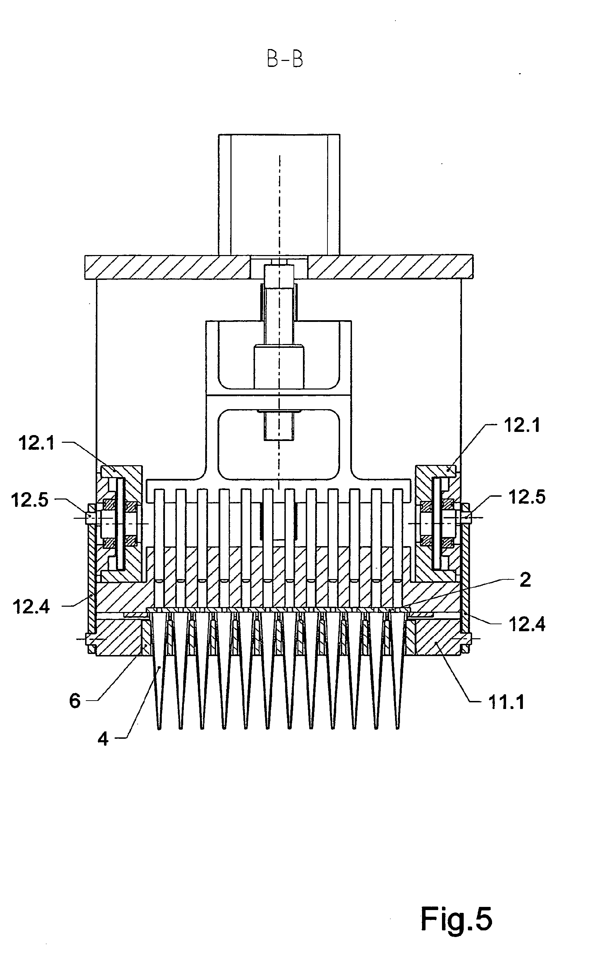

Ein drittes Ausführungsbeispiel 3, gezeigt in den **Fig. 4a****-b**, **5** und **6a-d**, unterscheidet sich zu den beiden vorbenannten Ausführungsbeispielen in der Ausführung der Magazinaufnahme 11 und einem Getriebe 12.

Die Magazinaufnahme 11 wird hier im Wesentlichen durch einen vierseitig geschlossenen Magazinrahmen 11.1 mit quer zur Hubrichtung verschiebbaren Riegeln 11.3 mit Auflageflächen 11.3.1 gebildet. Zur Verschiebung der Riegel 11.3 sind zwei Anschlagplatten 11.2 vorhandenen, an denen Gleitflächen 11.2.1 ausgebildet sind, entlang derer die Riegel 11.3 gleitend in ihrer Achsrichtung gegen eine Druckfeder 11.4 verschiebbar sind.

Im geöffneten Zustand der Magazinaufnahme 11 lagern die Riegel 11.3 unter Wirkung der Druckfedern 11.4 vollständig in die Durchgangslöcher 3.1 zurückgezogen und ragen nicht in den freien Innenraum des Magazinrahmens 11.1, der die Durchgangsöffnung 18 bildet. Der freie Innenraum ist mit seinen Abmessungen geringfügig größer als die Außenmaße des Magazins 6, sodass das Magazin 6 in den freien Innenraum und durch diesen hindurch gehoben oder abgesenkt werden kann.

Im geschlossenen Zustand der Magazinaufnahme 11 sind die Riegel 11.3 entgegen der Wirkung der Druckfedern 11.4 in den freien Innenraum ragend gelagert, womit durch die Riegel 11.3 Auflageflächen 11.3.1 für das Magazin 6 entlang zweier gegenüberliegender Seiten geschaffen werden.

Das Getriebe 12 umfasst im Wesentlichen einen Zahnriemen 12.2, zwei Antriebswellen 12.3, zwei Schneckengetriebe 12.1, zwei Excenterwellen 12.5 und zwei Zugkoppeln 12.4.

Durch den geschlossenen massiven Magazinrahmen 11.1 und die Verwendung von Schneckengetrieben 12.1 ist diese Ausführung sehr robust.

Der Antriebsmotor 8 treibt, über den Zahnriemen 12.2 und die beiden Antriebswellen 12.3, die beiden selbst hemmenden Schneckengetriebe 12.1 an, an denen abtriebsseitig jeweils eine Excenterwelle 12.5 vorgesehen ist. Auf den Excenterwellen 12.5 sind die beiden Zugkoppeln 12.4 gelagert. Die Drehbewegung der Schneckengetriebe 12.1 wird über die Zugkoppeln 12.4 in eine Hubbewegung des mit ihnen über Drehlager verbundenen Magazinrahmens 11.1 umgewandelt.

Im Magazinrahmen 11.1 befinden sich auf dessen freien Seiten Querbohrungen, in denen die Riegel 11.3 gleiten können.

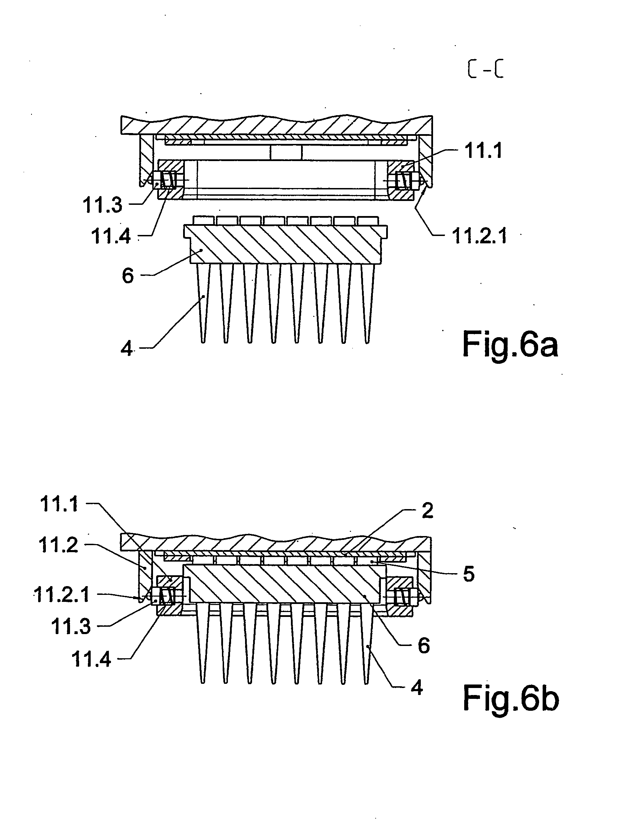

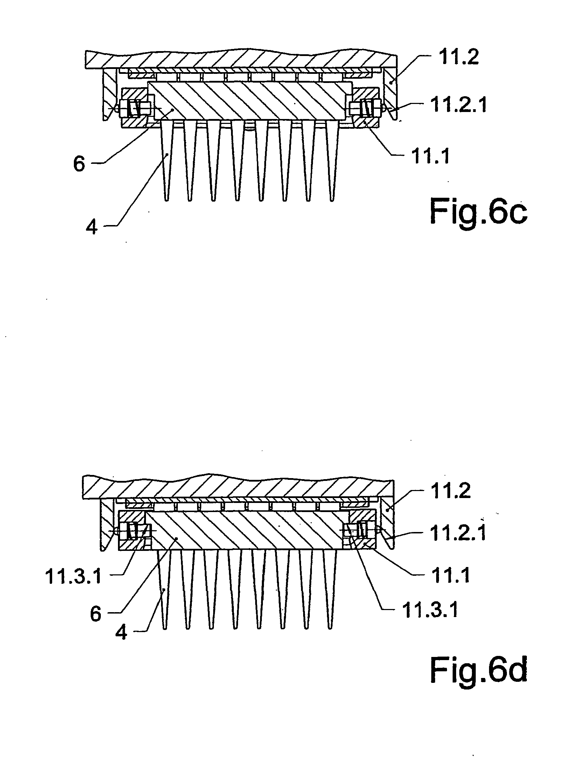

Die Funktionsweise einer Pipetiervorrichtung gemäß diesem dritten Ausführungsbeispiel ist in den **Fig. 6a****-c** dargestellt.

Zunächst befindet sich die Magazinaufnahme 11 im geöffneten Zustand, das heißt, dass der Magazinrahmen 11.1 abgesenkt ist und die Riegel 11.3 nicht in den freien Innenraum des Magazinrahmens 11.1 ragen.

Die Riegel 11.3 sind durch die Druckfedern 11.4 so weit aus dem Magazinrahmen 11.1 geschoben, bis sie mit ihren äußeren Enden an den Gleitflächen 11.2.1 der Anschlagplatten 11.2 anliegen.

Das Magazin 6, bestückt mit Pipettenspitzen 4, befindet sich unterhalb der Pipetiervorrichtung.

Grundsätzlich müssen zur Durchführung von Pipetierverfahren die Pipetiervorrichtung und damit die Pipettenspitzen 4 und ein Aufnahmegefäß aus dem Flüssigkeit entnommen bzw. in das Flüssigkeit abgegeben werden soll, wie z.B. eine Mikrotiterplatte, vertikal zueinander relativ beweglich sein. Über diese Beweglichkeit kann zunächst das Magazin 6 an die Dichtplatte 2 herangeführt werden, bis die Spitzenbunde 5 der Pipettenspitzen 4 an der Dichtplatte 2 anliegen, ohne dass auf diese eine Kraft wirkt.

Der Magazinrahmen 11.1 wird dann nach oben gezogen. Auf dem ersten Stück dieses Weges gleiten die Riegel 11.3 auf den Gleitflächen 11.2.1, die schräg zu den Achsen der Riegel 11.3 verlaufen, sodass mit kleiner werdendem Abstand zur Dichtplatte 2 die Riegel 11.3 zunehmend weiter in den freien Innenraum des Magazins 6 geschoben werden.

Auf dem letzten Stück des Weges, wenn die Excenterwellen 12.5 ihre größte Kraft entfalten, sind die Riegel 11.3 voll unter das Magazin 6 geschoben und die Pipettenspitzen 4 werden gegen die Dichtplatte 2 gepresst. Die vollständige Abdichtung der Pipettenspitzen 4 ist erreicht und die Selbsthemmung der Schneckengetriebe 12.1 erhält diesen Zustand.

Da die Riegel 11.3 fast kraftlos verschoben werden können, wäre auch ein aktiver Antrieb der Riegel 11.3 zum Verschieben einfach zu lösen.

In diesem Fall könnte sich der Hubweg auf wenige Zehntelmillimeter reduzieren, da ein gleiten entlang einer Gleitfläche 11.2.1 sich erübrigen würde. Eine solche Ausführung würde zwar einen zusätzlichen, kleinen und leistungsschwachen Antrieb benötigen, würde aber zu einem Zeitgewinn beim Wechseln der Pipettenspitzen 4 führen.

Für Applikationen, bei denen häufiger die Pipettenspitzen 4 gewechselt werden müssen und die dafür benötigte Zeit limitierend wirkt, wäre eine solche Ausführung von Vorteil.

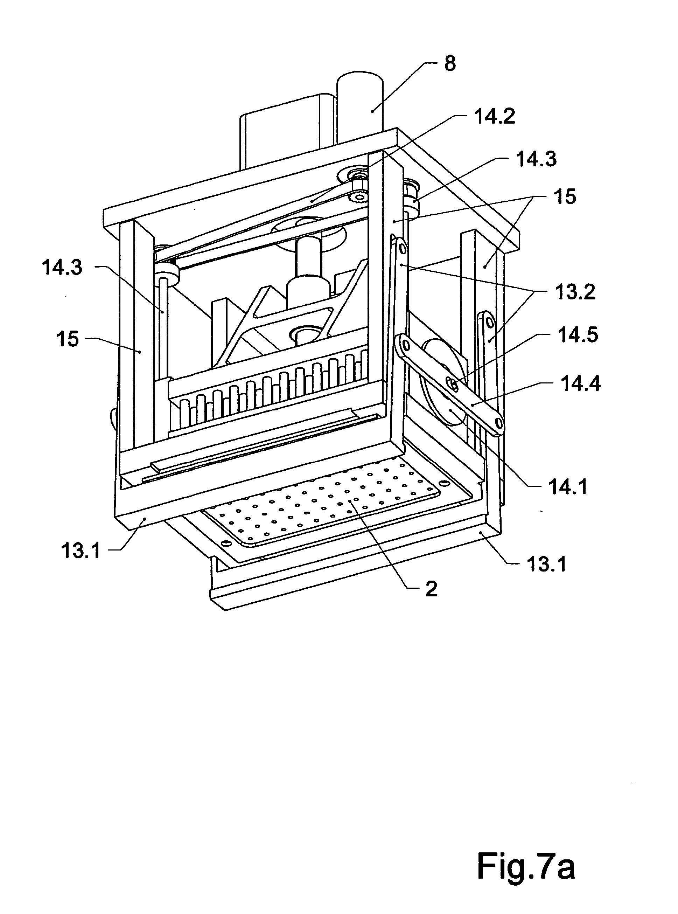

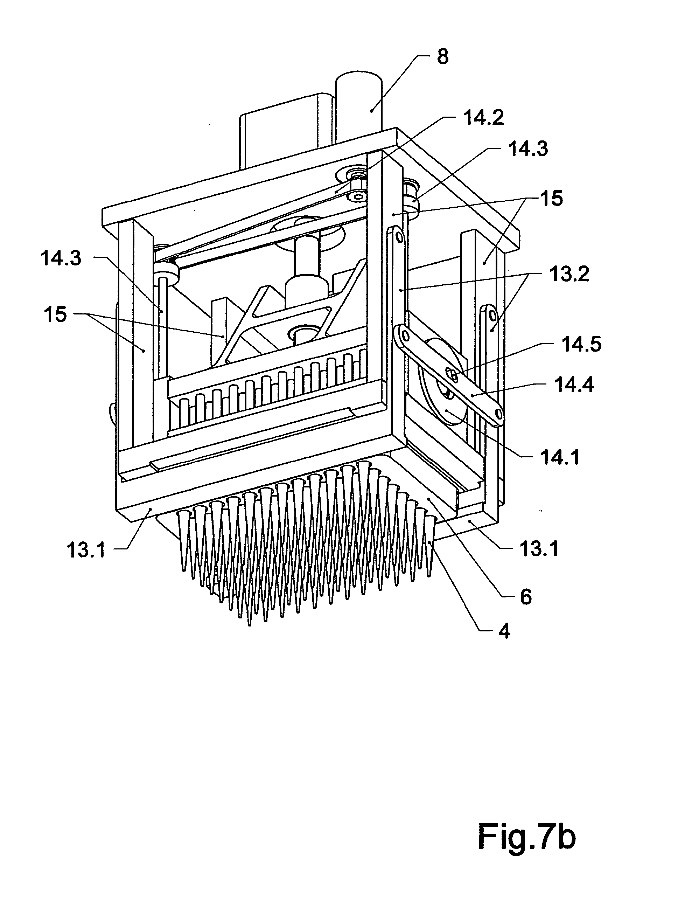

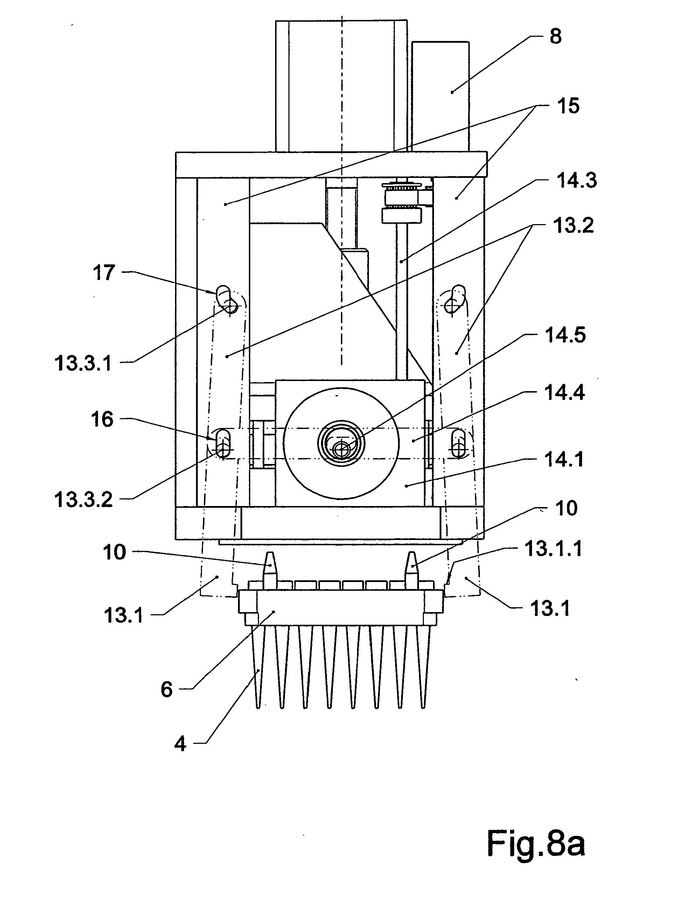

Das vierte Ausführungsbeispiel ergibt sich aus einer Kombination der voranbeschriebenen Ausführungsbeispiele und ist in den **Fig. 7a****-b** und **8a-d** dargestellt.

Vergleichbar mit dem zweiten Ausführungsbeispiel umfasst eine Magazinaufnahme 13 Schwenkklauen 13.1, die unter die Längsseiten des Magazins 6 greifen. Die Schwenkklauen 13.1 sind an den freien Enden von Klauenarmen 13.2 ausgebildet. Geführt werden die Klauenarme 13.2 über an deren anderen Enden ausgebildete ersten Führungszapfen 13.3.1, die in gekrümmten Langlöcher 17, welche im Gehäuserahmen 15 ausgebildet sind, eingreifen und über zweite Führungszapfen 13.3.2, die mit einer Zugkoppel 14.4 ein Drehgelenk bilden.

Ein den Antriebsmotor 8 mit der Magazinaufnahme 13 verbindendes Getriebe 14 umfasst im Wesentlichen einen Zahnriemen 14.2, zwei Antriebswellen 14.3, zwei Schneckengetriebe 14.1, zwei Excenterwellen 14.5 und zwei Zugkoppeln 14.4.

Der Antriebsmotor 8 treibt über den Zahnriemen 14.2 und die beiden Antriebswellen 14.3 die beidseitig angeordneten, selbsthemmenden Schneckengetriebe 14.1 an, an denen abtriebsseitig Excenterwellen 14.5 vorgesehen sind. Die Excenterwellen 14.5 greifen in die an den Zugkoppeln 14.4 mittig ausgebildete Langlöcher 16, 17 ein, womit die Drehbewegung der Excenterwellen 14.5 in eine Hubbewegung umgesetzt wird. Die Hubbewegung wird auf die Klauenarme 13.2 übertragen durch zwei weitere an den Enden der Zugkoppeln 14.4 ausgebildete Führungszapfen 3.3, die jeweils in den Klauenarmen 13.2 drehbar gelagert sind und in einem im Gehäuse ausgebildeten geraden Langloch 16 geführt werden.

Über die Einleitung der Hubbewegung in die Klauenarme 13.2, die mit ihrem einen Ende über einen Führungszapfen 3.3 jeweils in einem gekrümmten Langloch 17 gelagert sind, beschreiben die Schwenkklauen 13.1. eine kombinierte Schwenk- und Hubbewegung.

Die Schwenkklauen 13.1 führen hierbei nur eine sehr kleine kraftlose Drehbewegung unter das Magazin 6 aus, anschließend werden sie geradlinig mit viel Kraft nach oben gezogen und pressen mit dem Magazin 6 die Pipettenspitzen 4 gegen die Dichtplatte 2.

Im Gegensatz zum dritten Ausführungsbeispiel wird die Andruckkraft nicht nur punktförmig, sondern über die gesamte Längsseite des Magazins 6 eingeleitet, wodurch sich die Flächenpressung und damit die Anforderungen an den Werkstoff des Magazins 6 reduzieren.

In diesem vierten Ausführungsbeispiel ist eine, im Vergleich zu den ersten beiden Ausführungsbeispielen, andere Zentrierung beschrieben. Während dort um die Dichtplatte 2 angeordnete Zentrierkegel 10 vorgesehen sind, die beim Anheben des Magazins 6 am äußeren Umfang des Magazins 6 angreifen, sind hier Zentrierkegel 10 am Magazin 6 vorgesehen, die in Zentrieröffnungen eingreifen, die um die Dichtplatte 2 in der Basisplatte 1 vorgesehen sind.

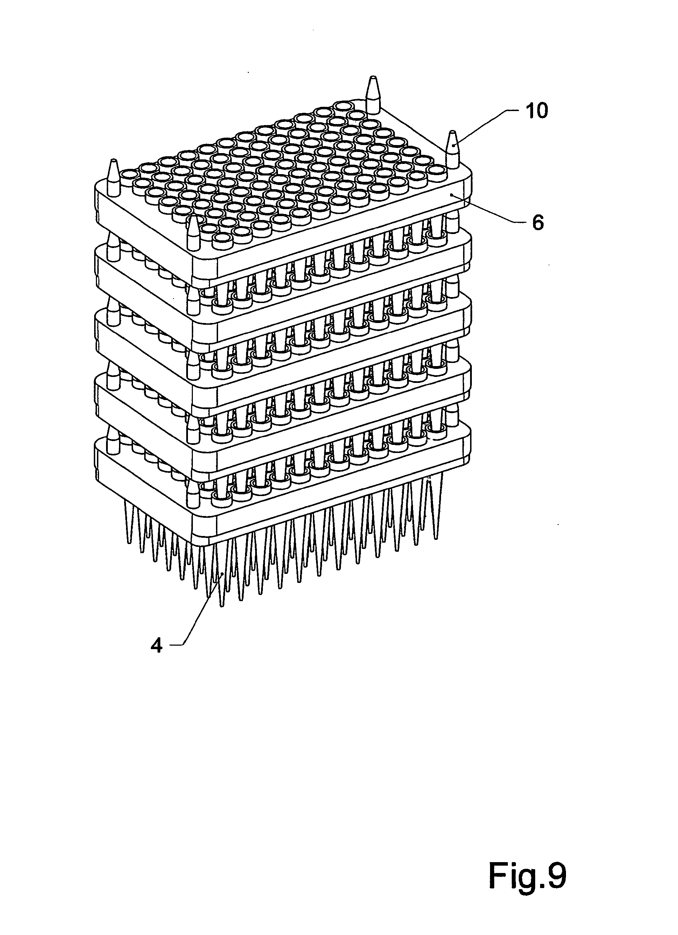

Das hat den Vorteil, dass sich mit einer erfindungsgemäßen Pipetiervorrichtung, die mit Pipettenspitzen 4 bestückten Magazine 6 ohne weitere Hilfsmittel so stapeln lassen, dass ohne zusätzliche Handlingseinrichtungen vom gebildeten Stapel (**Fig. 9**) mittels einer Magazinaufnahme 13 das oberste Magazin 6 entnommen und an die Dichtplatte 2 angezogen werden kann.

Diese Art der Zentrierung ist in entsprechend angepasster Form auch für die anderen Ausführungsbeispiele anwendbar.

Die Funktionsweise des vierten Ausführungsbeispiels ist in den **Fig. 8a****-d** dargestellt.

In **Fig. 8a** sind zunächst die Schwenkklauen 13.1 noch abgesenkt und nach außen geschwenkt.

Die Excenterwellen 14.5 und somit auch die Zugkoppeln 14.4 befinden sich in ihrer untersten Position, womit auch die Führungszapfen 3.3 in den untersten Positionen in den Langlöchern 16, 17 liegen.

Das Magazin 6 mit den Pipettenspitzen 4 passiert gerade die geöffneten Schwenkklauen 13.1 und könnte z. B. noch auf einem Stapel gemäß Fig. 9 liegen.

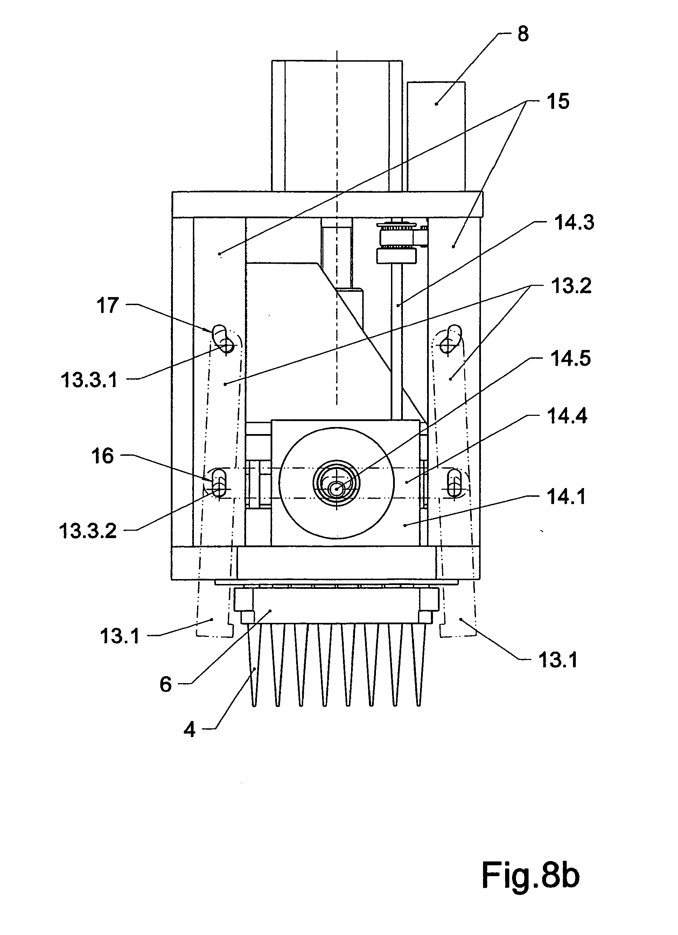

In **Fig. 8b** ist das Magazin 6 bereits bis an die Dichtplatte 2 geführt. Die Spitzenbunde 5 liegen kraftlos an. Während der vollzogenen Hubbewegung hat sich das Magazin 6 über seine Zentrierkegeln 10, die in die Zentrieröffnungen eingeführt wurden gegenüber dem Pipetiersystem positioniert. Die Hubbewegung wurde, wie in allen voranbeschriebenen Ausführungsbeispielen, entweder durch einen externen Mechanismus realisiert, welche das Magazin 6 angehoben hat bzw. durch die Pipetiervorrichtung, die abgesenkt wurde.

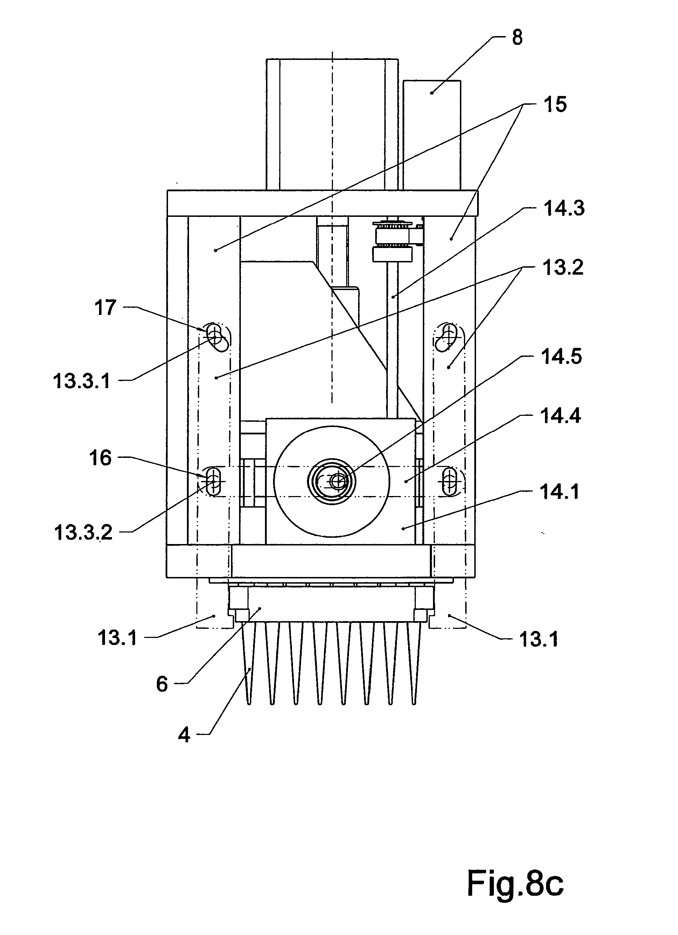

Mit der in **Fig. 8c** gezeigten Position beginnt der eigentliche Anzug der Pipettenspitzen 4 an die Dichtplatte 2. Mittels des Antriebsmotors 8 werden die Schneckengetriebe 14.1, und damit die Excenterwellen 14.5 in Drehung versetzt. Die Zugkoppeln 14.4 werden nach oben gezogen, und Klauenarme 13.2 werden unter das Magazin 6 geschwenkt und nach oben gezogen.

Mit dem Schwenken wird die Magazinaufnahme 13 geschlossen.

Dabei gleiten die Führungszapfen 3.3 in den Langlöchern 16,17.

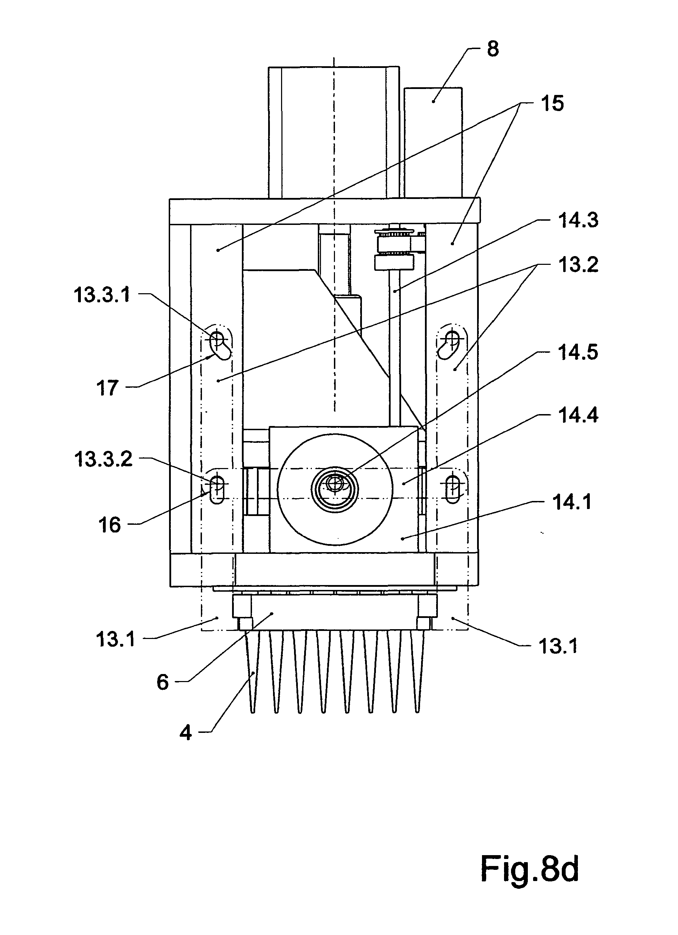

Auf dem letzten Stück des Hubweges, dargestellt in **Fig. 8d**, wenn die Excenterwellen 14.5 ihre größte Kraft entfalten, bewegen sich die Führungszapfen 3.3 im senkrechten Teil des gekrümmten Langloches 17 und pressen die Pipettenspitzen 4 mit ihrem Spitzenbund 5 gegen die Dichtplatte 2.

Die vollständige Abdichtung aller Pipettenspitzen 4 ist erreicht und die Selbsthemmung der Schneckengetriebe 14.1 erhält diesen Zustand.

Da die Schwenkklauen 13.1 fast kraftlos unter das Magazin 6 geschwenkt werden, wäre auch ein aktiver Antrieb der Schwenkklauen 13.1 einfach zu lösen.

In diesem Falle würden die gekrümmten Langlöcher 17 nicht benötigt werden und an die oberen Führungszapfen 3.3 würde ein zusätzlicher Antrieb angreifen.

In diesem Fall könnte sich der eigentliche Anzugsvorgang auf wenige Zehntelmillimeter reduzieren lassen.

Hierfür könnte ebenfalls ein Excenterwellentrieb mit geringer Exzentrizität genutzt werden. Optimal geeignet ist aber ein Piezo-Antrieb, weil er mit viel weniger Teilen auskommt, direkt an der Zugkoppel 14.4 angreifen kann, und durch seine Eigenschaft, über kurze Wege schnell hohe Kräfte entwickeln zu können, ideal zur Aufgabe passt. Diese Lösung benötigt zwar einen zusätzlichen, kleinen und leistungsschwachen Antrieb, beschleunigt aber den Spitzenwechsel.

Für Applikationen, bei denen ständig die Pipettenspitzen 4 gewechselt werden müssen und die dafür benötigte Zeit limitierend wirkt, ist eine solche Lösung von Vorteil.

Ein Magazin 6 für eine erfindungsgemäße Pipetiervorrichtung benötigt keinen Griff mehr, um es manuell oder mittels eines Greifers nach dem Schubkastenprinzip in die Magazinaufnahme 7, 11, 13 zu transportieren.

### Bezugszeichenliste

- 1: Basisplatte
- 2: Dichtplatte
- 3: Pipetierkanal
- 3.1: Durchgangsloch
- 3.2: Kolben
- 3.3: Führungszapfen
- 4: Pipettenspitze
- 5: Spitzenbund
- 6: Magazin
- 7: Magazinaufnahme des 1.+2. Ausführungsbeispiels
- 7.1: Schwenkklaue der Magazinaufnahme des 1.+2. Ausführungsbeispiels
- 7.1.1: Auflagefläche der Schwenkklaue der Magazinaufnahme des 1.+2. Ausführungsbeispiels
- 7.2: Lagerplatte
- 7.3: Hebelarm
- 8: Antriebsmotor
- 9: Getriebe des 1.+2. Ausführungsbeispiels
- 9.1: Zahnriemen
- 9.2: Gewindespindel
- 9.3: Antriebsmutter
- 9.4: Schubkoppel
- 10: Zentrierkegel
- 11: Magazinaufnahme des 3. Ausführungsbeispiels
- 11.1: Magazinrahmen
- 11.2: Anschlagplatte
- 11.2.1: Gleitfläche
- 11.3: Riegel
- 11.3.1: Auflagefläche des Riegels
- 11.4: Druckfeder
- 12: Getriebe des 3. Ausführungsbeispiels
- 12.1: Schneckengetriebe des 3. Ausführungsbeispiels 12.2 Zahnriemen des 3. Ausführungsbeispiels
- 12.3: Antriebswelle des 3. Ausführungsbeispiels
- 12.4: Zugkoppel des 3. Ausführungsbeispiels
- 12.5: Excenterwelle des 3. Ausführungsbeispiels
- 13: Magazinaufnahme des 4. Ausführungsbeispiels
- 13.1: Schwenkklaue der Magazinaufnahme des 4. Ausführungsbeispiels
- 13.1.1: Auflagefläche der Schwenkklaue der Magazinaufnahme des 4. Ausführungsbeispiels
- 13.2: Klauenarm
- 13.3.1: erster Führungszapfen
- 13.3.2: zweiter Führungszapfen
- 14: Getriebe des 4. Ausführungsbeispiels
- 14.1: Schneckengetriebe des 4. Ausführungsbeispiels
- 14.2: Zahnriemen des 4. Ausführungsbeispiels
- 14.3: Antriebswelle des 4. Ausführungsbeispiels
- 14.4: Zugkoppel des 4. Ausführungsbeispiels
- 14.5: Excenterwelle des 4. Ausführungsbeispiels
- 15: Gehäuserahmen
- 16: gerades Langloch
- 17: gekrümmtes Langloch
- 18: Durchgangsöffnung

## Patentansprüche

1. Pipetiervorrichtung mit
einer Basisplatte (1),
einer Vielzahl von in einem vorgegebenen Raster in der Basisplatte (1) angeordneten Pipetierkanälen (3),
einem im gleichen Raster mit Pipettenspitzen (4), die jeweils einen Spitzenbund (5) aufweisen, bestückten Magazin (6),
einer Magazinaufnahme (7, 11; 13)
sowie einem Antriebsmotor (8)
und einem die Magazinaufnahme (7, 11, 13) und den Antriebsmotor (8) verbindenden Getriebe (9, 12, 14), womit das Magazin (6) zwischen einer Aufnahme- und Ausgabeposition und einer Dichtposition in der die Spitzenbunde (5) mit den Pipetierkanälen (3) gegeneinander abgedichtet, kraftschlussig in Verbindung gebracht sind, vertikal bewegt werden kann, **dadurch gekennzeichnet, dass**
sich die Magazinaufnahme (7, 11, 13) in der Aufnahme- und Ausgabeposition in einem geöffneten Zustand befindet, in der sie eine Durchgangsöffnung (18) größer als das Magazin (6) bildet, so dass das Magazin (6) von unten in die Magazinaufnahme (7, 11, 13) eingeführt werden kann und sich die Magazinaufnahme (7, 11, 13) in der Dichtposition in einem geschlossenen Zustand befindet, in dem in die Durchgangsöffnung (18) Auflageflächen (7.1.1, 11.3.1, 13.1.1)ragen, auf denen das Magazin (6) aufliegt, und
dass das Getriebe (9, 12, 14) so ausgelegt ist, dass bei dessen Antrieb sowohl das Magazin (6) vertikal bewegt wird, als auch die Magazinaufnahme (7, 11, 13) in die genannten Positionen überführt wird.

2. Pipetiervorrichtung nach Anspruch 1, **dadurch gekennzeichnet, dass**
die Magazinaufnahme (11) einen geschlossenen Magazinrahmen (11.1) umfasst, mit einem freien Innenraum der die Durchgangsöffnung (18) bildet und in dem in horizontaler Richtung axial verschiebbare Riegel (11.3) vorgesehen sind, die im geschlossenen Zustand die Auflageflächen (11.3.1) bilden.

3. Pipetiervorrichtung nach Anspruch 1, **dadurch gekennzeichnet, dass** die Magazinaufnahme (7, 13) zwei Schwenkklauen (7.1, 13.1) umfasst, mit freien Enden, die im geöffneten Zustand die Durchgangsöffnung (18) begrenzen und im geschlossenen Zustand die Auflageflächen (7.1.1, 13.1.1) bilden.

4. Pipetiervorrichtung nach einem der Ansprüche 1-3, **dadurch gekennzeichnet, dass** am Magazin (6) Zentrierkegel (10) und in der Basisplatte (1) Zentrieröffnungen vorgesehen sind, in welche die Zentrierkegel (10) einführbar sind.

5. Pipetiervorrichtung nach Anspruch 2, **dadurch gekennzeichnet, dass** das Getriebe (12) ein Schneckengetriebe (12.1) umfasst, an dem abtriebsseitig eine Excenterwelle (12.5) angebracht ist, auf der eine Zugkoppel (12.4) um eines ihrer Enden drehbar gelagert ist, dessen anderes Ende mit dem Magazinrahmen (11.1) in Verbindung seht.

6. Pipetiervorrichtung nach Anspruch 3, **dadurch gekennzeichnet, dass** das Getriebe (14) ein Schneckengetriebe (14.1) umfasst, an dem abtriebsseitig eine Excenterwelle (14.5) angebracht ist, auf der eine Zugkoppel (14.4) vertikal verschiebbar gelagert ist, deren Enden mit Klauenarmen (13.2) in Verbindung stehen, an denen die Schwenkklauen (13.1) ausgebildet sind und die so zwangsgeführt sind, dass die Schwenkklauen (13.1) eine kombinierte Schwenk- und Hubbewegung vollziehen.

7. Pipetiervorrichtung nach Anspruch 2 oder 5, **dadurch gekennzeichnet, dass** an der Basisplatte (1) Anschlagplatten (11.2) mit schrägen Gleitflächen (11.2.1) vorgesehen sind, an denen die Riegel (11.3) mit einem äußeren Ende anliegen, sodass die Riegel (11.3) während der vertikalen Bewegung verschoben werden.

8. Pipetiervorrichtung nach Anspruch 2, **dadurch gekennzeichnet, dass**
die beiden Schwenkklauen (7.1) Drehachsen aufweisen, die in zwei mit der Basisplatte (1) in Verbindung stehenden Lagerplatten (7.2) drehbar gelagert sind und mit jeweils einem Ende von zwei Hebelarmen (7.3) starr verbunden sind, deren andere Enden mit dem Getriebe (9) in Verbindung stehen, sodass die Schwenkklauen (7.1) eine Schwenkbewegung vollziehen.

## Claims

1. Pipetting device comprising
a base plate (1),
a plurality of pipetting channels (3) arranged in a defined grid in the base plate (1), a magazine (6) populated with pipette tips (4) in said grid, each of said tips having a tip shoulder (5),
a magazine holder (7, 11, 13)
as well as a drive motor (8)
and a gear mechanism (9, 12, 14) connecting said magazine holder (7, 11, 13) and said drive motor (8), so that said magazine (6) is movable vertically between an aspirating and dispensing position and a sealing position, in which the tip shoulders (5) are non-positively connected to said pipetting channels (3) in such a way that said tip shoulders (5) and pipetting channels (3) are sealed off from each other, **characterized in that**
the magazine holder (7, 11, 13) is in an open state when in the aspirating and dispensing position, so as to form a passage opening (18) larger than the magazine (6), so that the magazine (6) can be inserted into the magazine holder (7, 11, 13) from the bottom and the magazine holder (7, 11, 13) is in a closed state when in the sealing position, in which support surfaces (7.1.1, 11.3.1, 13.1.1), against which the magazine (6) rests, project into the passage opening (18) and
that said gear mechanism (9, 12, 14) is designed in such a way that when it is driven, not only is the magazine (6) moved vertically, but also the magazine holder (7, 11, 13) is moved into the above-mentioned positions.

2. Pipetting device according to claim 1, **characterized in that**
the magazine holder (11) comprises a closed magazine frame (11.1) having a free interior that forms said passage opening (18) and has latches (11.3), which can be axially displaced in the horizontal direction and which form the support surfaces (11.3.1) in the closed state.

3. Pipetting device according to claim 1, **characterized in that**
said magazine holder (7, 13) comprises two swivel claws (7.1, 13.1) with free ends, which define the passage opening (18) in the open state and form the support surfaces (7.1.1, 13.1.1) in the closed state.

4. Pipetting device according to anyone of claims 1-3, **characterized in that**
said magazine (6) has centering cones (10) and said base plate (1) has centering openings in which the centering cones (10) can be inserted.

5. Pipetting device according to claim 2, **characterized in that**
said gear mechanism (12) comprises a worm gear (12.1) having an eccentric shaft (12.5) mounted on an output side thereof and a tension coupling link (12.4) mounted in a rotatable manner about one of its ends, its other end being connected to said magazine frame (11.1).

6. Pipetting device according to claim 3, **characterized in that**
the gear mechanism (14) comprises a worm gear (14.1) and an eccentric shaft (14.5) attached thereto on an output side thereof, a tension coupling link (14.4) mounted in a vertically displaceable manner on said eccentric shaft (14.5), the ends of said tension coupling link (14.4) being connected to claw arms (13.2) on which the swivel claws (13.1) are formed and that are positively driven so that the swivel claws (13.1) execute a combined swivel and lifting motion.

7. Pipetting device according to claim 2 or 5, **characterized in that**
said base plate (1) has stop plates (11.2) with inclined sliding surfaces (11.2.1), against which an outer end of the latches (11.3) rests, so that the latches (11.3) are displaced during the vertical movement.

8. Pipetting device according to claim 2 **characterized in that**
said two swivel claws (7.1) exhibit axes of rotation that are mounted in a rotatable manner in two bearing plates (7.2) connected to the base plate (1) and rigidly connected to one end of two lever arms (7.3), their other ends being connected to said gear mechanism (9) so that the swivel claws (7.1) execute a swivel motion.

## Revendications

1. Dispositif de pipetage avec
une plaque de base (1),
une pluralité de canaux de pipetage (3) disposés en trame définie dans la plaque de base (1),
un magasin (6) équipé de pointes de pipettes (4) en ladite trame, chacune des pointes ayant une épaule de pointes (5),
ainsi qu'un support de magasin (7, 11, 13)
et un moteur d'entraînement (8)
et un mécanisme d'engrenage (9, 12, 14) reliant ledit support de magasin (7, 11, 13) et ledit moteur d'entraînement (8), de façon que ledit magasin (6) puisse être déplacé verticalement entre une position de réception et de distribution et une position d'étanchéité, dans laquelle les épaules de pointes (5) sont liées auxdits canaux de pipetage (3) par adhérence telle que lesdites épaules de pointes (5) et lesdits canaux de pipetage (3) sont étanches les uns par rapport aux autres, **caractérisé en ce que**
le support de magasin (7, 11, 13) est en état ouvert dans la position de réception et de distribution pour former une ouverture de passage (18) plus grande que le magasin (6), de façon que le magasin (6) puisse être introduit dans le support de magasin (7, 11, 13) par le bas, et le support de magasin (7, 11, 13) est en état fermé dans la position d'étanchéité, dans laquelle des surfaces d'appui (7.1.1, 11.3.1, 13.1.1), contre lesquelles le magasin (6) repose, font saillie dans l'ouverture de passage (18) et
que ledit mécanisme d'engrenage (9, 12, 14) est conçu de telle façon que, quand il est entraîné, non seulement le magasin (6) est déplacé verticalement, mais aussi le support de magasin (7, 11, 13) est déplacé dans lesdites positions.

2. Dispositif de pipetage selon la revendication 1, **caractérisé en ce que**
le support de magasin (11) comprend un encadrement de magasin (11.1) fermé avec un intérieur libre formant ladite ouverture de passage (18) et ayant des loquets (11.3), qui peuvent être déplacés axialement en direction horizontale et qui forment les surfaces d'appui (11.3.1) en état fermé.

3. Dispositif de pipetage selon la revendication 1, **caractérisé en ce que**
ledit support de magasin (7, 13) comprend deux griffes pivotantes (7.1, 13.1) avec des extrémités libres, qui définissent l'ouverture de passage (18) en état ouvert et forment les surfaces d'appui (7.1.1, 13.1.1) en état fermé.

4. Dispositif de pipetage selon une des revendications 1-3, **caractérisé en ce que**
ledit magasin (6) a des cônes de centrage (10) et ladite plaque de base (1) a des ouvertures de centrage, dans lesquelles les cônes de centrage (10) peuvent être introduits.

5. Dispositif de pipetage selon la revendication 2, **caractérisé en ce que**
ledit mécanisme d'engrenage (12) comprend un engrenage à vis sans fin (12.1) ayant un arbre excentrique (12.5) y monté du côté sortie, sur lequel une bielle de traction (12.4) est monté de manière à pouvoir tourner autour d'une de ses extrémités, son autre extrémité étant liée audit encadrement de magasin (11.1).

6. Dispositif de pipetage selon la revendication 3, **caractérisé en ce que**
le mécanisme d'engrenage (14) comprend un engrenage à vis sans fin (14.1) et un arbre excentrique (14.5) y monté du côté sortie, sur lequel une bielle de traction (14.4) est monté de manière à pouvoir être déplacé verticalement audit arbre excentrique (14.5), les extrémités de la bielle de traction (14.4) étant liées à des bras de griffes (13.2) auxquels sont formées les griffes pivotantes (13.1) et qui sont entraînés de façon forcée telle que les griffes pivotantes (13.1) exécutent un mouvement combiné de pivotement et de levage.

7. Dispositif de pipetage selon la revendication 2 ou 5, **caractérisé en ce que**
ladite plaque de base (1) a des plaques de butée (11.2) avec des surfaces de glissement inclinées (11.2.1), contre lesquelles repose une extrémité extérieure des loquets (11.3) de façon que les loquets (11.3) sont déplacés pendant le mouvement vertical.

8. Dispositif de pipetage selon la revendication 2, **caractérisé en ce que**
les deux griffes pivotantes (7.1) ont des axes de rotation, qui sont montés de manière à pouvoir tourner dans deux plaques d'appui (7.2) liées à la plaque de base (1) et liés de manière rigide à une extrémité de deux bras de levier (7.3), leurs autres extrémités étant liées audit mécanisme d'engrenage (9) de façon que les griffes pivotantes (7.1) exécutent un mouvement de pivotement.
